(19) 

Europäisches Patentamt

European Patent Office

Office européen des brevets

(11) **EP 2 851 559 B1**

(12) **EUROPEAN PATENT SPECIFICATION**

(45) Date of publication and mention of the grant of the patent:
**07.03.2018 Bulletin 2018/10**

(51) Int Cl.:
*F03D 7/02* *(2006.01)*  *F03D 7/04* *(2006.01)*

(21) Application number: **13184942.4**

(22) Date of filing: **18.09.2013**

(54) **Method and arrangement for controlling a rotor movement of a wind turbine rotor**

Verfahren und Anordnung zur Steuerung der Rotorbewegung eines Windturbinenrotors

Procédé et dispositif pour commander un mouvement du rotor de turbine éolienne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.03.2015 Bulletin 2015/13**

(73) Proprietor: **Siemens Aktiengesellschaft 80333 München (DE)**

(72) Inventors:
- **Egedal, Per 7400 Herning (DK)**
- **Kallesoee, Bjarne Skovmose 2880 Bagsværd (DK)**
- **Laurberg, Hans 8000 Århus C (DK)**

(56) References cited:
**US-A- 4 193 005**  **US-A1- 2009 224 543**
**US-A1- 2010 225 113**  **US-A1- 2011 221 194**

## Description

Field of invention

The present invention relates to a method and to an arrangement for controlling a rotor movement of a rotor of a wind turbine.

Art Background

A wind turbine may comprise a wind turbine tower, a nacelle mounted on top of the tower, the nacelle having a rotor supported therein, wherein the rotor has attached thereto two or more rotor blades which, upon impact of wind, drive the rotor to rotate. Thereupon, using an electric generator, electric energy may be produced and may be supplied via a transmission network to a utility grid to provide electric energy to plural consumers.

Depending on wind conditions, in particular wind speed and/or wind direction, the rotor may rotate with different rotor speeds. Thereby, the rotor may be required to rotate within acceptable limits, such as below in particular a (critical) rotor speed limit. When approaching the critical rotor speed limit or even exceeding the rotor speed limit, a heavy mechanical load, in particular an extreme load may be imposed on components of the wind turbine, such as a bearing, blades, the mechanical strength of components, such as rotation shaft, etc. Therefore, in a conventional wind turbine, a number of safety systems may be installed. A fault situation may be a turbine controller failure, in which the pitch servo system pitches all the blades into full operation position. Without a safety system, this situation could result in a fatal overspeed of the rotor. In the full operation position (also referred to as pitching into fine) the rotor blade is oriented regarding its pitch angle for optimal transfer of wind energy into rotational energy of the rotor for producing electric energy. The full operation position is in contrast to a stop position in which only a small portion wind energy is transferred into a slow rotational movement for running the wind turbine in an idle mode (no or very little energy production). Thus, to pitch the blade(s) into fine means to pitch the rotor blade(s) into full production.

In such a fault situation being a turbine controller failure, where the pitch servo system pitches all the blades into full production, in a conventional wind turbine, the pitch emergency system using the conventional safety strategy would be activated, when the rotor speed approaches the speed limit for the overspeed guard. However, using this safety strategy, the controller failure may result in an extreme load which may cause later problems.

There may be a need for a method and for an arrangement for controlling a rotor movement, in order to reduce or mitigate or even avoid some of the above-mentioned problems. In particular, there may be a need for a method and an arrangement (in particular emergency blade pitch method and system) for controlling a rotor movement, in order to avoid heavy mechanical loads on components of the wind turbine under a number of conditions, in particular high wind conditions and/or controller failure conditions.

US 2011/0221194 A1 provides an example of controlling the rotor movement by limiting the rotor acceleration to a value set according to the rotor speed.

Summary of the Invention

This need may be met by the subject-matter of the independent claims. The dependent claims define particular embodiments of the present invention.

According to an embodiment of the present invention it is provided a method (in particular emergency blade pitch method) for controlling a rotor movement of a rotor of a wind turbine, the method comprising determining a current rotor acceleration value and controlling the rotor movement based on the measured rotor acceleration value.

The method may for example be performed by a wind turbine controller and/or a wind park controller. The rotor movement may for example be characterized by rotor speed and rotor acceleration. The rotor acceleration may in particular relate to a time derivative of a rotor speed, wherein the rotor speed represents the angular velocity with which the rotor rotates around its rotation axis which is parallel to a rotor shaft which is supported in a nacelle of the wind turbine.

The current rotor acceleration value may for example be derived or calculated from one or more measurement values, for example based on a power output of the wind turbine, a voltage output of the wind turbine, or in particular based on an actually measured rotor acceleration, using encoder or accelerometer or gyro. Controlling the rotor movement may comprise maintaining, changing and/or adjusting a rotor speed and/or a rotor acceleration. When controlling the rotor movement, the (measured) rotor acceleration value is taken into account. In particular, for different (measured) rotation acceleration values, the controlling the rotor movement may be performed in a different manner.

In particular, according to an embodiment of the present invention, a new detection method is proposed, which is based on a measured acceleration of the rotor speed. The method may use one or more acceleration limits and the acceleration limits may be taken into account to control the rotor movement. By detecting a fault situation based on the acceleration, i.e. the rotor acceleration, in addition to or instead of an overspeed detection, may enable to react to a faulty condition much earlier and in particular before the rotor speed reaches a critical limit. Thereby, a mechanical load may be reduced or even avoided. Further, according to an embodiment of the present invention, this kind of controller fault situation may not giving designed driving loads and thereby material cost may be saved.

According to an embodiment of the present invention, controlling the rotor movement is further based on a current rotor speed value, wherein in particular acceleration limits are defined as a function of rotor speed. Thus, a combination of current rotor speed value and current rotor acceleration value may be taken into account for controlling the rotor movement which may provide a higher flexibility, in particular in order to even further reduce the mechanical loads experienced by components of the wind turbine.

When defining one or more acceleration limits as a function of the rotor speed, a deteriorating influence may depend on both the rotor speed and the rotor acceleration. For example, at a relatively low rotor speed, a rotor acceleration which is relatively high may be tolerated, while for a relatively high rotor speed, a relatively lower acceleration or rotor acceleration may be tolerated. Thereby, a desirable operational region for operating the rotor may be defined in a more accurate manner such that heavy load conditions may be avoided.

According to an embodiment of the present invention, controlling the rotor movement comprises controlling a rotor speed and the rotor acceleration. Several measures may be taken to control rotor speed and/or rotor acceleration. For example, a torque generated by a generator of the wind turbine may be adjusted, such as to influence, change or maintain rotor speed and/or rotor acceleration. Furthermore, a yaw driving system may be controlled, in order to rotate the wind turbine (in a vertical direction) out or into a wind direction. Furthermore, alternatively or additionally, a rotor blade servo system may be operated, in order to adjust, change or maintain a rotor blade pitch angle, defining an orientation of rotor blades connected to the rotor. In particular, the rotor blade pitch angle may define an orientation of the rotor blade with respect to a longitudinal axis of the rotor blade (the longitudinal axis of the rotor blade being in a plane perpendicular to the rotation axis of the rotor). By changing the rotor blade pitch angle, the transfer of momentum from the wind to the rotor blade and thus the driving force of the wind to rotate the rotor may be influenced. Thereby, the rotor speed and/or rotor acceleration may be controlled, adjusted and/or changed.

According to an embodiment of the present invention, the controlling the rotor speed includes reducing the rotor speed. In particular, when the current rotor speed value approaches a critical rotor speed limit, the rotor speed may be reduced or at least maintained below the critical rotor speed limit. Thereby, the critical rotor speed limit may also depend on the current rotor acceleration. In particular, for a relatively high current rotor acceleration, the critical rotor speed limit may be lower than the critical rotor speed limit for a relatively lower acceleration or current rotor acceleration.

Thereby, a desirable operational region of operation of the rotor may be accurately defined, thereby in particular increasing efficiency of the wind turbine and at the same time reducing mechanical loads.

According to an embodiment of the present invention, controlling the rotor movement is performed such that the rotor speed value and the rotor acceleration value lie within a set of 2-tuples but not outside the set of 2-tuples.

The set of 2-tuples may define the operational region in which the rotor may be operated in a safe manner without imposing too heavy loads in components of the wind turbine.

In contrast, it may not be desired to operate the rotor outside the set of 2-tuples, as components of the wind turbine may experience relatively high loads or even critical loads with the risk of damage when operated outside the set of 2-tuples.

Advantageously, the method according to this embodiment may ensure, that the rotor is operated in the intended operational region.

According to an embodiment of the present invention, the set of 2-tuples is definable as a continuous region in a rotor speed/rotor acceleration coordinate system that is limited by a limiting curve partially obtained by successively connecting, in particular in a straight manner using a second, a third and a fourth line, four points with each other, each point defining a 2-tuple comprising a respective rotor speed value and rotor acceleration value.

The limiting curve may for example be a line having sections of straight lines which are connected at the four points. Using four points to define the limiting curve may simplify the method. In other embodiments, more (for example 5 - 10 or 5 - 100) or less (for example 1 - 3 or 1 - 4) points may be used to define the limiting curve.

Additionally or alternatively to a limiting curve defined by a number of straight lines, also curved lines may be used to define the limiting curve, in particular curved lines which connect successively the four points with each other.

According to an embodiment of the present invention, the four points comprise a first point having a first rotor speed value w1 and a first rotor acceleration value a1, a second point having a second rotor speed value w2 and a second rotor acceleration value a2, a third point having a third rotor speed value w3 and a third rotor acceleration value a3, and a fourth point having a fourth rotor speed value w4 and a fourth rotor acceleration value a4, wherein it holds at least one of the following: w1 < w2, a1 = a2, w2 < w3, a2 > a3, w3 = w4, a3 > a4, a4 = 0.

When w1 < w2 and a1 = a2 points below a line connecting the first point and the second point may belong to the set of 2-tuples and thereby, the method may ensure that the rotor acceleration stays below the rotor acceleration value a1. If it would be allowed by the method that the current rotor acceleration exceeds the rotor acceleration value a1, then there would be the risk that very quickly a rotor overspeed situation evolves, since the rotor acceleration is relatively high such that in a very fast manner, the rotor speed may evolve to approach or even exceed a critical rotor speed limit. Thereby, by ensuring that the rotor acceleration value stays below the rotor acceleration value a1, such a problematic and possibly damaging situation may be avoided.

Furthermore, when w2 < w3 and further when w1 < w2 and when a2 > a3, it means that at relatively higher rotor speed, a relatively lower rotor acceleration is considered by the method as critical such that the method ensures to keep the rotor speed below the rotor speed value w3 even for rotor acceleration values which are below a3, in order to reduce or even avoid mechanical damage.

Furthermore, the rotor speed value w2 may be below an absolute critical rotor speed limit, such as w3. Nevertheless, according to the control method, even at this rotor speed value w2, the rotor movement is controlled such that the rotor acceleration value stays below the second rotor acceleration value a2. This is, because if the rotor acceleration value would not be kept below the second rotor acceleration value a2, there might the risk that the rotor speed in a fast manner approaches a critical rotor speed limit, such as for example the rotor speed value w3.

Thus, the method according to this embodiment may react in a fast manner, and in particular earlier than a conventional method, in order to ensure that the rotor speed stays below the critical rotor speed.

The fourth rotor acceleration value a4 may take other values than 0.

According to an embodiment of the present invention, it holds at least one of the following: 2 deg/s^2 < a1 < 4 deg/s^2, 0 deg/s^2 < a3 < 3 deg/s^2, 8 rpm < w1 < 12 rpm, 10 rpm < w3 < 13 rpm.

In particular, a1 may amount to about 3 deg/s^2, a3 may amount to about 1.3 deg/s^2. Further, in particular, w1 may amount to about 10 rpm and w3 may for example amount to about 11.3 rpm.

The values for the different mentioned rotor speed values w1, w2, w3, w4 and the different rotor acceleration values a1, a2, a3 and a4 may differ depending on the construction, dimension and material of the rotor or rotor blades or other components of the wind turbine.

According to an embodiment of the present invention, the limiting curve is further defined by a first line having rotor speed values equal to the first rotor speed value and having rotor acceleration values equal to or greater than the first rotor acceleration value, wherein the limiting curve is further defined by a fifth line having rotor speed values equal to or greater than the fourth rotor speed value and having rotor acceleration values equal to the fourth rotor acceleration value.

In particular, when at a relatively low rotor speed value, such as w1 (being the first rotor speed value), then even for relatively high accelerations, there may be only a very low probability that the rotor speed will in a fast manner approach a critical rotor speed limit. Furthermore, when the rotor speed value is a relative high value such as the fourth rotor speed value w4, then any rotor acceleration value which is above 0 may give rise to a risk of approaching or even exceeding a critical rotor speed value. Thus, at very high rotor speed values, which are equal to or greater than the fourth rotor speed value w4, the method may ensure that the rotor acceleration stays at or below 0. Having a negative rotor acceleration means that the rotor is decelerated, i.e. reduces its rotor speed.

According to an embodiment of the present invention, w3 corresponds to a critical rotor speed above which the rotor is not constructed to operate.

According to other embodiments, the third rotor speed value w3 may be different from a critical rotor speed. According to a conventional method, a rotor speed may only be controlled based on the critical rotor speed (independently from an actual rotor acceleration) and may adjust or change the rotor speed only if the rotor speed approaches or exceeds the critical rotor speed. According to embodiments of the present invention however, even at rotor speeds below a critical rotor speed, the method may, dependent on the current rotor acceleration, change the rotor speed, or at least maintain the rotor speed, in order to ensure that the 2-tuples comprising the rotor speed and the rotor acceleration is maintained within the acceptable operational region, i.e. the set of 2-tuples.

According to an embodiment of the present invention, when the rotor movement approaches the limiting curve, a pitch servo system is operated to pitch blades of the rotor out of the full operation position in order to reduce a driving force of wind impacting on the rotor blades. In particular the pitch servo system may be operated to pitch blades of the rotor into a stop position.

Thereby, the rotational speed and/or rotor acceleration may effectively be reduced, such as to keep the rotor movement within the desired operational region.

According to an embodiment of the present invention, determining a current rotor acceleration value comprises measuring, in particular by a gyro and/or accelerometer, the current rotor acceleration value.

The gyro and/or the accelerometer may provide a raw or a processed measurement signal to a controller performing the method and the controller may use the measurement signal in an algorithm for controlling other components of the wind turbine, such as a generator for torque, a blade pitch angle, or the like which in turn may influence, change or adjust a rotor movement. Thereby, the method may be simplified.

It should be understood that features which have been individually or in any combination disclosed, described, mentioned or provided for a method of controlling a rotor movement of a rotor of the wind turbine may also be applied, individually or in any combination, to an arrangement for controlling a rotor movement of a rotor of a wind turbine and vice versa.

According to an embodiment it is provided an arrangement for controlling a rotor movement of a rotor of a wind turbine, the arrangement comprising a determining section adapted to determine a current rotor acceleration value; a control section adapted to control the rotor movement based on the measured rotor acceleration value.

The arrangement may be comprised in a wind turbine controller and/or a wind park controller.

The arrangement may also comprise computer-readable instructions which are stored on a computer-readable storage medium and which, when executed by a computing system, are adapted to carry out a method for controlling a rotor movement as described above in one of the embodiments.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 illustrates a graph depicting a rotor speed according to a conventional control method;

Fig. 2 illustrates a graph depicting a rotor acceleration according to a conventional control method;

Fig. 3 illustrates a graph and an intended operational region in a rotor speed/rotor acceleration coordinate system according to an embodiment of the present invention; and

Fig. 4 schematically illustrates a wind turbine comprising an arrangement for controlling a rotor movement according to an embodiment of the present invention which is adapted to carry out a method for controlling a rotor movement according to an embodiment of the present invention.

Detailed Description

The illustration in the drawings is in schematic form.

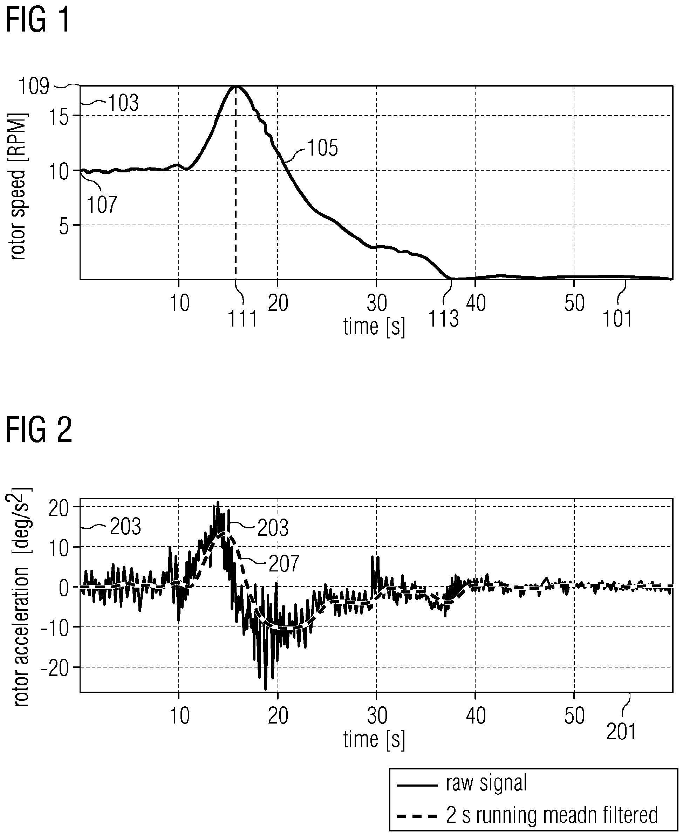

**Fig. 1** illustrates a graph, wherein an abscissa 101 indicates the time in seconds and an ordinate 103 indicates the rotor speed in RPM of a wind turbine. The curve 105 illustrates the course of the rotor speed of the wind turbine in a fault situation with a turbine controller failure such that the rotor speed increases from a nominal rotor speed 107 to a critical rotor speed 109. At the critical rotor speed limit 109, the wind turbine components would experience heavy loads and would be damaged if longer operated at this limit rotor speed 109. Therefore, according to a conventional method, the pitch servo system pitches all the blades of the wind turbine into fine when a situation is detected in which the rotor speed reaches the limit rotor speed 109. The detection of the limit rotor speed 109 is done at the time point 111 and after the time point 111, the rotor blades are turned into fine which results in a decrease of the rotor speed 105 from the limit rotor speed 109 essentially to 0 at a time point 113. The conventional method does not take into account a rotor acceleration.

**Fig. 2** illustrates a graph, wherein an abscissa 201 indicates the time in seconds and an ordinate 203 indicates the rotor acceleration in deg/s^2. The rotor acceleration thus represents a time derivative of the rotor speed as indicated in Fig. 1.

The curve 205 indicates the acceleration as instantaneously measured, while the curve 207 indicates the acceleration averaged over two seconds. As can be observed, the instantaneous acceleration 205 exhibits a number of spikes around the averaged acceleration 207. The conventional control method results in a designed given extreme load.

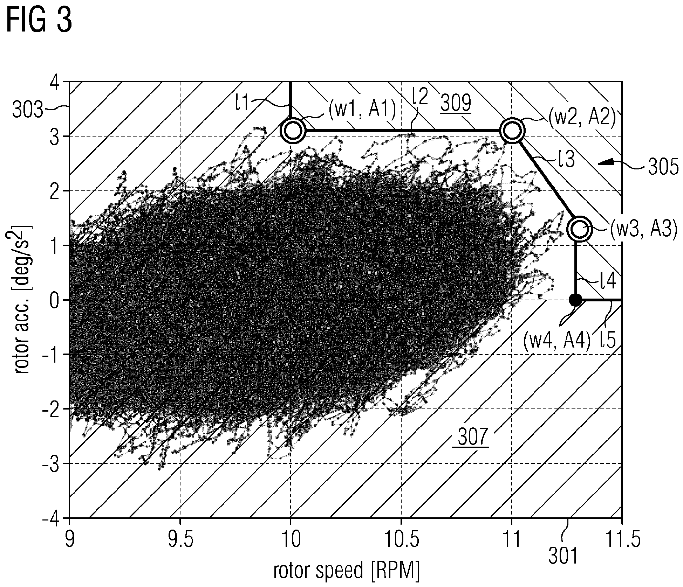

In order to improve the rotor movement control method, according to an embodiment of the present invention, measured accelerations of the rotor speed are taken into account. As is illustrated in **Fig. 3,** in which an abscissa 301 indicates the rotor speed in RPM and an ordinate 303 indicates the rotor acceleration in deg/s^2, a limiting curve 305 is defined by a first line 11, a second line 12, a third line 13, a fourth line 14 and a fifth line 15. Thereby, a set of 2-tuples below and to the left of the limiting curve 305 defined by the lines 11, 12, 13, 14, 15 represents an intended operational region 307 for operating the rotor of the wind turbine. A control method for controlling the rotor movement according to an embodiment of the present invention achieves, to keep the rotor movement in the set 307 of 2-tuples and prohibits the rotor movement to lie within a complement 309 of the set of 2-tuples 307.

Thereby, the four points (w1, a1), (w2, a2), (w3, a3), (w4, a4) define the limiting curve 305 and in particular define the straight lines 11, 12, 13, 14 and 15. The first point (w1, a1) is connected to the second point (w2, a2) to form the second line 12. The first line 11 runs in a vertical direction (having a constant rotor speed) and goes through the first point (w1, a1). The third line 13 connects the second point (w2, a2) to the third point (w3, a3). The fourth line 14 connects the third point (w3, a3) with the fourth point (w4, a4). The fifth line 15 runs in a horizontal direction (having constant acceleration being 0 in the depicted example) and goes through the fourth point (w4, a4). The rotor acceleration value a1 may also be considered as an acceleration limit below which the rotor movement is held by the control method according to an embodiment of the present invention. Furthermore, the third rotor speed value w3 may be considered as a critical rotor speed limit which must not be superseded when operating the rotor, in order to avoid damage of the rotor or other components of the wind turbine, such as the rotor blades.

The conventional method (as illustrated in Figs. 1 and 2) may take into account only the rotor speed limit w3 without taking into account the rotor acceleration, in particular not taking into account the rotor acceleration at rotor speeds below the rotor speed limit w3. In contrast, the control method according to an embodiment of the present invention takes into account the rotor acceleration value even when the rotor speed is below the rotor speed limit w3. For example, if the rotor speed value amounts to a first rotor speed value w1 and the rotor acceleration amounts to a first rotor acceleration value a1, there may be the risk (although the rotor speed value is well below the critical rotor speed limit w3) that the actual rotor speed approaches or even increases the fast manner above the critical rotor speed limit w3. Therefore, even at this relatively low rotor speed value w1, the present embodiment of the invention maintains or keeps the rotor movement to be within the set 307 of 2-values, thus to be not above the first point (w1, a1) and in particular not being above and right of the first point (w1, a1). Thereby, the control method according to an embodiment of the present invention may in a more reliable manner and in a faster manner adjust the rotor movement, in order to ensure that the rotor movement is within the set 307 of 2-tuples representing an intended operational region.

As can in particular be taken from Fig. 3, the acceleration limits a1, a2, a3 are a function of the rotor speed w1, w2, w3, respectively.

As a procedure to maintain the rotor movement within the set 307 of 2-tuples (i.e. the intended acceptable operational region) a number of measures may be taken. For example, a rotor blade pitch angle may be controlled, changed, adjusted or maintained, in order to achieve, that the rotor movement stays within the set 307 of 2-tuples. Alternatively or additionally, a generator torque may be adjusted and/or a yaw angle of the wind turbine may be adjusted.

In other embodiments, the limiting line 305 may be defined in another coordinate system or may be defined without any reference to any coordinate system, such as by storing a number of points on the limiting curve for example in an electronic storage. The curves between a number of points such as the four points (w1, a1), ..., (w4, a4) may be (at least partially) straight or/and may comprise curved sections.

According to alternative embodiments, the limiting curve may be defined by a mathematical formula. The curve 305 may be represented in any suitable form, such as in an analytical form or in a form comprising a discrete or continuous set of values, such as 2-tuples.

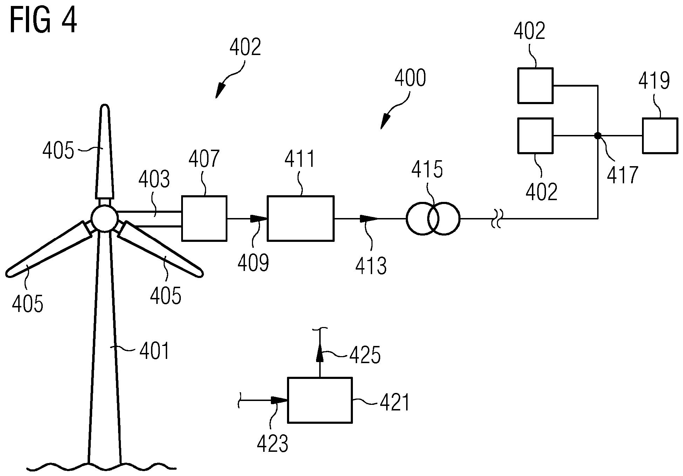

**Fig. 4** schematically illustrates a wind turbine comprising an arrangement 421 for controlling a rotor movement of a rotor of the wind turbine according to an embodiment of the present invention. The system 400 illustrated in Fig. 4 comprises a wind turbine tower 401, a not illustrated nacelle in which a rotor shaft 403 is rotatably supported, wherein at the rotor shaft 403 plural rotor blades 405 are connected. The rotor shaft 403 drives, upon rotation, a generator 407 which provides a variable frequency AC power stream 409 to a converter 411 which converts the power stream to a fixed frequency power stream 413 which is transformed via a wind turbine transformer 415 to a higher voltage and then supplied to a point of common coupling 417 to which a number of not other wind turbines 402 are connected and which provides the accumulated generated electrical energy to a utility grid 419.

The wind turbine 402 also comprises an arrangement 421 for controlling a rotor movement of the rotor 403 of the wind turbine 402. Thereby, the arrangement 421 is adapted to determine, in particular based on a measurement signal 423, a current rotor acceleration value representing the current value of the rotor acceleration of the rotor 403 of the wind turbine 402. Further, the arrangement 421 is adapted for controlling, via a control signal 425 the rotor movement of the rotor 403 based on the measured rotor acceleration value. In particular, the control value 425 may be supplied to a blade pitch servo system which may adapt the blade pitch angle of the rotor blades 405, such that the rotor movement stays within an intended operational region, such as the set 307 of 2-tuples as illustrated in Fig. 3.

In particular, the arrangement 421 may be adapted to carry out a method for controlling a rotor movement according to an embodiment of the present invention.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for controlling a rotor movement of a rotor (403) of a wind turbine (402), the method comprising:

    determining a current rotor acceleration value (207);

controlling the rotor movement based on the measured rotor acceleration value (207),

wherein controlling the rotor movement is performed such that the rotor speed value (301) and the rotor acceleration value (303) lie within a set (307) of 2-tuples but not outside (309) the set of 2-tuples, wherein the set (307) of 2-tuples is defined as a continuous region in a rotor speed/rotor acceleration coordinate system (301,303),

wherein controlling the rotor movement is further based on a current rotor speed value (301), wherein acceleration limits (a1, a2, a3, a4) are defined as a function of rotor speed (w1, w2, w3, w4), **characterized in that** at a relatively low rotor speed, a rotor acceleration value which is relatively high is tolerated, while for a relatively high rotor speed, a relatively lower rotor acceleration value is tolerated.

2. Method according to claim 1, wherein controlling the rotor movement comprises controlling a rotor speed (301) and the rotor acceleration (303).

3. Method according to claim 2, wherein controlling rotor speed includes reducing the rotor speed.

4. Method according to one of claims 1 to 3, wherein the set (307) of 2-tuples is limited by a limiting curve (305) partially obtained by successively connecting, in particular in a straight manner using a second (12), a third (13) and a fourth (14) line, four points with each other, each point defining a 2-tuple comprising a respective rotor speed value (w1, w2, w3, w4) and rotor acceleration value (a1, a2, a3, a4).

5. Method according to claim 4, wherein the four points comprise

a first point (w1, a1) having a first rotor speed value w1 and a first rotor acceleration value a1, a second point (w2,a2) having a second rotor speed value w2 and a second rotor acceleration value a2, a third point (w3,a3) having a third rotor speed value w3 and a third rotor acceleration value a3, and a fourth point (w4,a4) having a fourth rotor speed value w4 and a fourth rotor acceleration value a4,

wherein it holds at least one of the following:

$$w1 < w2,$$

$$a1 = a2,$$

$$w2 < w3,$$

$$a2 > a3,$$

$$w3 = w4,$$

$$a3 > a4,$$

$$a4 = 0.$$

6. Method according to claim 4 or 5, wherein it holds at least one of the following:

$$2\ deg/s^2 < a1 < 4\ deg/s^2$$

$$0\ deg/s^2 < a3 < 3\ deg/s^2,$$

$$8\ rpm < w1 < 12\ rpm,$$

$$10\ rpm < w3 < 13\ rpm.$$

7. Method according to one of claims 4 to 6, wherein the limiting curve is further defined by a first line (11) having rotor speed values equal to the first rotor speed value and having rotor acceleration values equal to or greater than the first rotor acceleration value, wherein the limiting curve is further defined by a fifth line (15) having rotor speed values equal to or greater than the fourth rotor speed value and having rotor acceleration values equal to the fourth rotor acceleration value.

8. Method according to one of claims 5 to 7, wherein w3 corresponds to a critical rotor speed above which the rotor (403) is not constructed to operate.

9. Method according to one of claims 4 to 8, wherein, when the rotor movement approaches the limiting curve (305), a pitch servo system is operated to pitch blades of the rotor into a stop position.

10. Method according to one of the preceding claims, wherein determining a current rotor acceleration value comprises measuring, in particular by a gyro and/or accelerometer, the current rotor acceleration value.

**11.** Arrangement (421) for controlling a rotor movement of a rotor (403) of a wind turbine (402), the arrangement comprising:

a determining section adapted to determine a current rotor acceleration value;
a control section adapted to control the rotor movement based on the measured rotor acceleration value,

wherein controlling the rotor movement is performed such that the rotor speed value (301) and the rotor acceleration value (303) lie within a set (307) of 2-tuples but not outside (309) the set of 2-tuples, wherein the set (307) of 2-tuples is defined as a continuous region in a rotor speed/rotor acceleration coordinate system (301,303), wherein controlling the rotor movement is further based on a current rotor speed value (301), wherein acceleration limits (a1, a2, a3, a4) are defined as a function of rotor speed (w1, w2, w3, w4), **characterized in that** at a relatively low rotor speed, a rotor acceleration value which is relatively high is tolerated, while for a relatively high rotor speed, a relatively lower rotor acceleration value is tolerated.

**12.** Wind turbine (402), comprising:

a rotor (403);
an arrangement (421) according to claim 11; and
a blade pitch control system connected to the control section for adjusting a blade pitch angle of a blade (405) for controlling the rotor movement of the rotor (403).

**Patentansprüche**

**1.** Verfahren zum Regeln einer Rotorbewegung eines Rotors (403) einer Windenergieanlage (402), das Folgendes umfasst:

Bestimmen eines aktuellen Rotorbeschleunigungswerts (207),
Regeln der Rotorbewegung auf der Grundlage des gemessenen Rotorbeschleunigungswerts (207),

wobei das Regeln der Rotorbewegung so erfolgt, dass der Rotordrehzahlwert (301) und der Rotorbeschleunigungswert (303) in einem Satz (307) 2-Tupel, jedoch nicht außerhalb (309) des Satzes 2-Tupel liegen,
wobei der Satz (307) 2-Tupel als kontinuierlicher Bereich in einem Rotordrehzahl/Rotorbeschleunigung-Koordinatensystem (301, 303) definiert ist,

wobei das Regeln der Rotorbewegung ferner auf einem aktuellen Rotordrehzahlwert (301) basiert, wobei Beschleunigungsgrenzwerte (a1, a2, a3, a4) in Abhängigkeit von der Rotordrehzahl (w1, w2, w3, w4) definiert sind,

**dadurch gekennzeichnet, dass** bei einer relativ geringen Rotordrehzahl ein relativ hoher Rotorbeschleunigungswert toleriert wird, während bei einer relativ hohen Rotordrehzahl ein relativ geringer Rotorbeschleunigungswert toleriert wird.

**2.** Verfahren nach Anspruch 1, wobei das Regeln der Rotorbewegung das Regeln einer Rotordrehzahl (301) und der Rotorbeschleunigung (303) umfasst.

**3.** Verfahren nach Anspruch 2, wobei zum Regeln der Rotordrehzahl das Verringern der Rotordrehzahl gehört.

**4.** Verfahren nach einem der Ansprüche 1 bis 3, wobei der Satz (307) 2-Tupel durch eine Grenzkurve (305) begrenzt ist, die teilweise durch aufeinanderfolgendes Verbinden von vier Punkten miteinander insbesondere auf gerade Weise unter Verwendung einer zweiten (12), einer dritten (13) und einer vierten (14) Linie erhalten wird, wobei jeder Punkt ein 2-Tupel definiert, das einen jeweiligen Rotordrehzahlwert (w1, w2, w3, w4) und Rotorbeschleunigungswert (a1, a2, a3, a4) umfasst.

**5.** Verfahren nach Anspruch 4, wobei die vier Punkte Folgendes umfassen:

einen ersten Punkt (w1, a1) mit einem ersten Rotordrehzahlwert w1 und einem ersten Rotorbeschleunigungswert a1,
einen zweiten Punkt (w2, a2) mit einem zweiten Rotordrehzahlwert w2 und einem zweiten Rotorbeschleunigungswert a2,
einen dritten Punkt (w3, a3) mit einem dritten Rotordrehzahlwert w3 und einem dritten Rotorbeschleunigungswert a3 und
einen vierten Punkt (w4, a4) mit einem vierten Rotordrehzahlwert w4 und einem vierten Rotorbeschleunigungswert a4,

wobei mindestens eine der folgenden Bedingungen gilt:

$$w1 < w2,$$

$$a1 = a2,$$

$$w2 < w3,$$

$$a2 > a3,$$

$$w3 = w4,$$

$$a3 > a4,$$

$$a4 = 0.$$

6.  Verfahren nach Anspruch 4 oder 5, wobei mindestens eine der folgenden Bedingungen gilt:

$$2 \text{ Grad/s}^2 < a1 < 4 \text{ Grad/s}^2,$$

$$0 \text{ Grad/s}^2 < a3 < 3 \text{ Grad/s}^2,$$

$$8 \text{ U/min} < w1 < 12 \text{ U/min},$$

$$10 \text{ U/min} < w3 < 13 \text{ U/min}.$$

7.  Verfahren nach einem der Ansprüche 4 bis 6, wobei die Grenzkurve ferner durch eine erste Linie (11) definiert ist, die dem ersten Rotordrehzahlwert entsprechende Rotordrehzahlwerte und Rotorbeschleunigungswerte aufweist, welche größer gleich dem ersten Rotorbeschleunigungswert sind, wobei die Grenzkurve ferner durch eine fünfte Linie (15) definiert ist, die Rotordrehzahlwerte aufweist, welche größer gleich dem vierten Rotordrehzahlwert sind, und dem vierten Rotorbeschleunigungswert entsprechende Rotorbeschleunigungswerte aufweist.

8.  Verfahren nach einem der Ansprüche 5 bis 7, wobei w3 einer kritischen Rotordrehzahl entspricht, über der der Rotor (403) auslegungsgemäß nicht arbeiten darf.

9.  Verfahren nach einem der Ansprüche 4 bis 8, wobei ein Einstellwinkel-Servosystem so betrieben wird, dass es Rotorblätter in eine Stoppposition bringt, wenn sich die Rotorbewegung der Grenzkurve (305) nähert.

10. Verfahren nach einem der vorhergehenden Ansprüche, wobei das Bestimmen eines aktuellen Rotorbeschleunigungswerts das Messen des aktuellen Rotorbeschleunigungswerts insbesondere durch ein Gyroskop und/oder einen Beschleunigungsmesser umfasst.

11. Anordnung (421) zum Regeln einer Rotorbewegung eines Rotors (403) einer Windenergieanlage (402), wobei die Anordnung Folgendes umfasst:

    einen Bestimmungsabschnitt, der so ausgelegt ist, dass er einen aktuellen Rotorbeschleunigungswert bestimmt,
    einen Regelabschnitt, der so ausgelegt ist, dass er die Rotorbewegung auf der Grundlage des gemessenen Rotorbeschleunigungswerts regelt,

    wobei das Regeln der Rotorbewegung so erfolgt, dass der Rotordrehzahlwert (301) und der Rotorbeschleunigungswert (303) in einem Satz (307) 2-Tupel, jedoch nicht außerhalb (309) des Satzes 2-Tupel liegen,
    wobei der Satz (307) 2-Tupel als kontinuierlicher Bereich in einem Drehzahl/Rotorbeschleunigung-Koordinatensystem (301, 303) definiert ist,
    wobei das Regeln der Rotorbewegung ferner auf einem aktuellen Rotordrehzahlwert (301) basiert, wobei Beschleunigungsgrenzwerte (a1, a2, a3, a4) in Abhängigkeit von der Rotordrehzahl (w1, w2, w3, w4) definiert sind,

    **dadurch gekennzeichnet, dass** bei einer relativ geringen Rotordrehzahl ein relativ hoher Rotorbeschleunigungswert toleriert wird, während bei einer relativ hohen Rotordrehzahl ein relativ geringer Rotorbeschleunigungswert toleriert wird.

12. Windenergieanlage (402), die Folgendes umfasst:

    einen Rotor (403),
    eine Anordnung (421) nach Anspruch 11 und ein mit dem Regelabschnitt verbundenes Einstellwinkelregelsystem zum Verstellen eines Blatteinstellwinkels eines Blatts (405) zwecks Regeln der Rotorbewegung des Rotors (403).

**Revendications**

1.  Procédé permettant de commander un mouvement de rotor d'un rotor (403) d'une turbine éolienne (402), le procédé consistant à :

    déterminer une valeur d'accélération de rotor actuelle (207) ;
    commander le mouvement de rotor sur la base de la valeur d'accélération de rotor mesurée (207),
    dans lequel commander le mouvement de rotor est exécuté de sorte que la valeur de la vitesse du rotor (301) et la valeur d'accélération du rotor (303) se situent à l'intérieur d'un ensemble (307) de 2 tuples mais pas à l'extérieur (309) de l'ensemble de 2 tuples,

dans lequel l'ensemble (307) de 2 tuples est défini en tant que région continue dans un système de coordonnées d'accélération de rotor/vitesse de rotor (301, 303),

dans lequel commander le mouvement de rotor est basé en outre sur une valeur de vitesse de rotor actuelle (301), dans lequel des limites d'accélération (a1, a2, a3, a4) sont définies en tant que fonction d'une vitesse de rotor (w1, w2, w3, w4),

**caractérisé en ce que**

à une vitesse de rotor relativement faible, une valeur d'accélération du rotor qui est relativement élevée est tolérée, tandis que pour une vitesse de rotor relativement élevée, une valeur d'accélération de rotor relativement inférieure est tolérée.

2. Procédé selon la revendication 1, dans lequel commander le mouvement du rotor consiste à commander une vitesse du rotor (301) et l'accélération du rotor (303).

3. Procédé selon la revendication 2, dans lequel commander la vitesse du rotor consiste à réduire la vitesse du rotor.

4. Procédé selon l'une des revendications 1 à 3, dans lequel l'ensemble (307) de 2 tuples est limité par une courbe de limitation (305) obtenue partiellement par connexion de manière successive, en particulier de manière rectiligne à l'aide d'une deuxième (12), d'une troisième (13) et d'une quatrième (14) ligne, de quatre points les uns aux autres, chaque point définissant 2 tuples comprenant une valeur de vitesse de rotor respective (w1, w2, w3, w4) et une valeur d'accélération de rotor (a1, a2, a3, a4).

5. Procédé selon la revendication 4, dans lequel les quatre points comprennent :

un premier point (w1, a1) ayant une première valeur de vitesse de rotor w1 et une première valeur d'accélération de rotor a1,
un deuxième point (w2, a2) ayant une deuxième valeur de vitesse de rotor w2 et une deuxième valeur d'accélération de rotor a2,
un troisième point (w3, a3) ayant une troisième valeur de vitesse de rotor w3 et une troisième valeur d'accélération de rotor a3, et
un quatrième point (w4, a4) ayant une quatrième valeur de vitesse de rotor w4 et une quatrième valeur d'accélération de rotor a4,

dans lequel il contient au moins un élément parmi ce qui suit :

$$w1 < w2,$$

$$a1 = a2,$$

$$w2 < w3,$$

$$a2 > a3,$$

$$w3 = w4,$$

$$a3 > a4,$$

$$a4 = 0.$$

6. Procédé selon la revendication 4 ou 5, dans lequel il contient au moins un élément parmi ce qui suit :

$$2 \text{ deg/s}^2 < a1 < 4 \text{ deg/s}^2$$

$$0 \text{ deg/s}^2 < a3 < 3 \text{ deg/s}^2,$$

$$8 \text{ rpm} < w1 < 12 \text{ rpm},$$

$$10 \text{ rpm} < w3 < 13 \text{ rpm}.$$

7. Procédé selon l'une des revendications 4 à 6, dans lequel la courbe de limitation est définie en outre par une première ligne (11) ayant des valeurs de vitesse de rotor égales à la première valeur de vitesse de rotor et ayant des valeurs d'accélération de rotor égales ou supérieures à la première valeur d'accélération de rotor,

dans lequel la courbe de limitation est définie en outre par une cinquième ligne (15) ayant des valeurs de vitesse de rotor égales ou supérieures à la quatrième valeur de vitesse de rotor et ayant des valeurs d'accélération de rotor égales à la quatrième valeur d'accélération de rotor.

8. Procédé selon l'une des revendications 5 à 7, dans lequel w3 correspond à une vitesse de rotor critique au-dessus de laquelle le rotor (403) n'est pas conçu pour fonctionner.

9. Procédé selon l'une des revendications 4 à 8, dans lequel, lorsque le mouvement de rotor s'approche de la courbe de limitation (305), un système d'asservissement de pas est actionné pour faire tourner des pales du rotor dans une position d'arrêt.

10. Procédé selon l'une des revendications précédentes, dans lequel déterminer une valeur d'accélération de rotor actuelle consiste à mesurer, en particulier par un gyroscope et/ou un accéléromètre, la valeur d'accélération de rotor actuelle.

11. Agencement (421) permettant de commander un mouvement de rotor d'un rotor (403) d'une turbine éolienne (402), l'agencement comprenant :

    une section de détermination adaptée pour déterminer une valeur d'accélération de rotor actuelle ;
    une section de commande adaptée pour commander le mouvement de rotor sur la base de la valeur d'accélération de rotor mesurée,
    dans lequel commander le mouvement du rotor est exécuté de sorte que la valeur de la vitesse du rotor (301) et la valeur d'accélération du rotor (303) se situent à l'intérieur d'un ensemble (307) de 2 tuples mais pas à l'extérieur (309) de l'ensemble de 2 tuples,
    dans lequel l'ensemble (307) de 2 tuples est défini en tant que région continue dans un système de coordonnées d'accélération de rotor/vitesse de rotor (301, 303),
    dans lequel commander le mouvement du rotor est basé en outre sur une valeur de vitesse de rotor actuelle (301), dans lequel des limites d'accélération (a1, a2, a3, a4) sont définies en tant que fonction d'une vitesse de rotor (w1, w2, w3, w4),
    **caractérisé en ce que**
    à une vitesse de rotor relativement faible, une valeur d'accélération du rotor qui est relativement élevée est tolérée, tandis que pour une vitesse de rotor relativement élevée, une valeur d'accélération de rotor relativement inférieure est tolérée.

12. Turbine éolienne (402), comprenant :

    un rotor (403) ;
    un agencement (421) selon la revendication 11 ; et
    un système de commande de pas de pale connecté à la section de commande permettant de régler un angle de pas de pale d'une pale (405) afin de commander le mouvement de rotor du rotor (403).

FIG 1

FIG 2

| | raw signal |
| --- | --- |
| - - - | 2 s running meadn filtered |

## FIG 3

FIG 4

**EP 2 851 559 B1**

**REFERENCES CITED IN THE DESCRIPTION**

**Patent documents cited in the description**

- US 20110221194 A1